(19) Europäisches Patentamt
European Patent Office
Office européen des brevets

(11) EP 1 801 132 A1

(12) EUROPÄISCHE PATENTANMELDUNG

(43) Veröffentlichungstag:
**27.06.2007 Patentblatt 2007/26**

(51) Int Cl.:
***C08F 8/00*** *(2006.01)*

(21) Anmeldenummer: **05112546.6**

(22) Anmeldetag: **21.12.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder:
- **Kuraray Europe GmbH**
  **65926 Frankfurt am Main (DE)**
- **Kuraray Co., Ltd.**
  **Okayama 710-8622 (JP)**

(72) Erfinder:
- **Köhnen, Sven**
  **65527, Niedernhausen (DE)**
- **Dr. Frank, Michael**
  **Kuraray Spec. Europe GmbH**
  **55129, Mainz (DE)**
- **Dr. Gutweiler, Matthias**
  **65597, Hünfelden (DE)**
- **Ikeda, Kaoru**
  **710-8622, Okayama (JP)**

(74) Vertreter: **Kisters, Michael Marcus et al**
**Kuraray Europe GmbH**
**Patents and Trademarks**
**Mülheimer Strasse 26**
**53840 Troisdorf (DE)**

(54) **Verfahren zur Modifizierung von Polyvinylbutyralen**

(57) Die Erfindung betrifft ein Verfahren zur Modifikation von acetalisierten Polyvinylalkoholen durch Reaktion mit Epoxiden in der Polymerschmelze.

EP 1 801 132 A1

## Beschreibung

Die Erfindung betrifft ein Verfahren zur Modifikation von acetalisierten Polyvinylalkoholen durch Reaktion mit Epoxiden.

Technisches Gebiet

Acetalisierte Polyvinylalkohole (PVA), wie z.B. Polyvinylbutyral (PVB) weisen mit steigendem Molekulargewicht auch steigende Viskositäten bzw. Schmelzflussindizes auf. Für Anwendungen als Bindemittel z.B. in Druckfarben oder Coatings wäre es jedoch wünschenswert, hochmolekulare acetalisierte Polyvinylalkohole mit niedriger Viskosität bzw. Schmelzflussindex einzusetzen. Hierzu bietet es sich an, die verbliebenen Hydroxyfunktionen des Polymeren mit Seitenketten zu modifizieren, um so die Effekte der Wasserstoffbrückenbindungen zwischen den Hydroxyfunktionen zu minimieren.

EP 1 403 289 A1 beschreibt ein solches Verfahren. Hier werden Ethylen-Vinylalkoholcopolymere im Extruder mit Glycidestern umgesetzt. Durch die Reaktion werden die Epoxide an die Hydroxyfunktionen unter Erhalt einer entsprechenden Seitenkette addiert. Die Seitenkette ist durch eine Hydroxyfunktion mit verschiedenen Stellungsisomeren funktionalisiert.

Die hier eingesetzten Copolymere enthalten zwischen 5 und 55 Mol% Ethyleneinheiten; die restlichen Repetiereinheiten sind Vinylacetat- und Vinylalkoholgruppen. Der Hydrolysegrad dieser Polymere beträgt mehr als 90 %, d.h. die eingesetzten Polymere weisen eine große Anzahl von Hydroxyfunktionen auf. Somit können durch die Reaktion mit den Epoxiden relativ leicht hohe Umsätze bzw. Substitutionsgrade erreicht werden. Der Einsatz von Polyvinylalkoholen ohne Ethyleneinheiten oder acetalisierten Polyvinylalkoholen mit/ohne Ethyleneinheiten, d.h. von Verbindungen mit einer erheblich geringeren Anzahl von freien Hydroxyfunktionen ist in dieser Publikation nicht erwähnt.

DE 42 019 41 A1 offenbart die Herstellung eines Lacksystems durch Umsetzen von Polyvinylbutyral mit Glycidethern als Epoxid in organischen Lösungsmitteln. Der Einsatz von Lösungsmitteln ist häufig nicht erwünscht, da diese nur schwer entfernt werden können und Reste im Endprodukt verbleiben. Solche Polymere sind z.B. für Lebensmittelverpackungen nicht verwendbar.

Aufgabe

Aufgabe der vorliegenden Erfindung war es daher, ein Verfahren zur Herstellung von modifizierten, acetalisierten Polyvinylalkoholen zur Verfügung zu stellen, das die Nachteile des Standes der Technik nicht aufweist.

Darstellung der Erfindung

Gegenstand der vorliegenden Erfindung ist daher ein Verfahren zur Herstellung von modifizierten, acetalisierten Polyvinylalkoholen durch Umsetzen einer Schmelze des acetalisierten Polyvinylalkohols mit mindestens einem Epoxid der allgemeinen Formel I

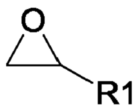 I

mit
$R_1$ = H, aliphatischer, cycloaliphatischer aromatischer oder aliphatisch-aromatischer Rest mit 1 bis 20 Kohlenstoffatomen oder $CH_2O(CO)CCH_2R_2$ und
$R_2$ = H, aliphatischer Rest mit 1 bis 10 Kohlenstoffatomen

Im Folgenden wird unter der Modifizierung des acetalisierten Polyvinylalkoholen die formale Addition von Epoxiden an dessen Hydroxyfunktionen verstanden.

Zum Erhalt von strahlenchemisch vernetzbaren modifizierten, acetalisierten Polyvinylalkoholen können Epoxide gemäß der allgemeinen Formel II

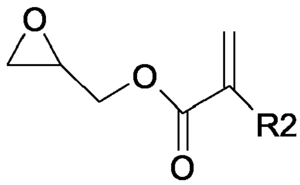

II

wobei R2 die Bedeutung H, aliphatischer Rest mit 1 bis 10 Kohlenstoffatomen, insbesondere R2 = $-CH_3$ oder $-C_2H_5$, besitzt, eingesetzt werden.

Auf diese Weise werden substituierte, acetalisierte Polyvinylalkohole erhalten, die eine reaktive Doppelbindung in der neu eingefügten Seitenkette besitzen. Diese Doppelbindungen können thermisch oder strahlenchemisch, bevorzugt mit UV-Strahlung vernetzt werden.

Die im Verfahren gemäß der Erfindung eingesetzten acetalisierten Polyvinylalkohole weisen bevorzugt einen Acetalisierungsgrad von 65 - 88 Gew.% auf. Neben den Acetalgruppen weisen diese Polymere einen Anteil von 0,5 - 8, bevorzugt 1 - 6 Gew.% Restacetatgruppen und einen entsprechenden Anteil an freien Alkoholfunktionen auf.

Bevorzugt wird als acetalisierter Polyvinylalkohol ein mit mindestens einem aliphatischen Aldehyd mit 1 bis 10 Kohlenstoffatomen acetalisierter Polyvinylalkohol, insbesondere Polyvinylbutyral, eingesetzt.

Der Rest-Polyvinylalkoholgehalt der erfindungsgemäß eingesetzten acetalisierten Polyvinylalkohole liegt bevorzugt zwischen 10 und 30 Gew.%, insbesondere zwischen 14 und 18 Gew.% bzw. alternativ zwischen 19 und 27 Gew. %. Solche Polymere sind unter dem Handelsnamen Mowital von der Firma Kuraray Specialities Europe GmbH erhältlich.

Bevorzugt werden die acetalisierten Polyvinylalkohole in Form eines Granulats, insbesondere eines durch Extrusion hergestellten Granulats z.B. gemäß WO 2005/019312 A1 eingesetzt. Granulierte Produkte weisen vorteilhaft eine niedrige Feuchtigkeit und höhere Feststoffgehalte pro Volumen bzw. eine höhere Schüttdichte auf.

Das erfindungsgemäße Verfahren wird bevorzugt in der Schmelze des acetalisierten Polyvinylalkohols durchgeführt. Hierbei haben sich Schmelzetemperaturen von 150 bis 270°C, insbesondere 170 bis 250°C, bzw. 190 bis 250°C bewährt. Bevorzugt wird die Umsetzung in einem Rohrreaktor, Rührkessel oder Extruder durchgeführt.

Das erfindungsgemäße Verfahren wird bevorzugt in Anwesenheit bzw. unter Katalyse von Metallsalzen, wie z.B. Zn-, Fe- und/oder Sn-Salzen durchgeführt. Als besonders geeignet hat sich der Zusatz des katalytischen Systems $Zn(acac)_2/CF_3SO_3H/DME$ gemäß EP 1 403 289 A1 erwiesen.

Alternativ kann die Umsetzung auch unter Anwesenheit von Basen, insbesondere von sterisch gehinderten Stickstoffbasen, wie z.B. Basen der allgemeinen Formeln III bis V

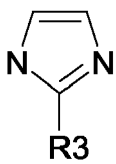

III

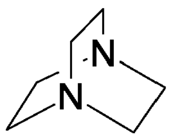

IV

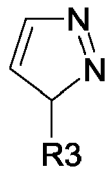

V

durchgeführt werden ($R_3$ = H, $CH_3$ oder $C_2H_5$).

Die Umsetzung erfolgt bevorzugt in Abwesenheit eines organischen Lösungsmittels oder Wasser, d.h. die Umsetzung erfolgt praktisch in der Polymerschmelze. Geringe Mengen an Lösungsmittel wie z.B. bei der Zugabe des Katalysators erforderlich, stören nicht und gelten bis zu einem Zusatz von 5 Gew. % nicht als Lösungsmittel.

Mit dem erfindungsgemäßen Verfahren ist es möglich, alle oder zumindest einen Teil der Restalkoholgruppen des acetalisierten Polyvinylalkohols zu substituieren. Bevorzugt werden 25 - 95 %, insbesondere 30 - 75 % der ursprünglich im acetalisierten Polyvinylalkohol vorhandenen Restalkohol-Gruppen substituiert.

Durch das erfindungsgemäße Verfahren wird die Viskosität der unmodifizierten Ausgangsprodukte bei kaum verändertem Molgewicht vermindert, da die Umsetzung bevorzugt ohne Vernetzung von Polymerketten erfolgt. Die Umsetzung wird bevorzugt bis zu einer Verminderung der Viskosität der erfindungsgemäß hergestellten Polymere von mindestens 10 %, bevorzugt von mindestens 20%, insbesondere von mindestens 30%, bezogen auf den eingesetzten acetalisierten Polyvinylalkohol durchgeführt. Die Bestimmung der Viskosität erfolgt gemäß DIN 53015 bei 20°C mit einem Viskosimeter nach Höppler.

Die erfindungsgemäß hergestellten Polymere können aufgrund ihrer verminderten Viskosität gegenüber den

unmodifizierten Ausgangsprodukten als Bestandteil von Beschichtungsmaterialien wie Pulverlacken oder Flüssiglacken, bei der Herstellung von Folien oder in keramischen Anwendungen zur Herstellung sog. Grünfolien durch den Tape-cast-Prozess verwendet werden. Die erfindungsgemäß hergestellten Polymere weisen weiterhin ein verbessertes Dispergierverhalten auf und können daher in Druckfarben, Siebdruckpasten, Metallpigmentpasten oder zur Herstellung von Keramischen Pulvern verwendet werden.

Beispiele:

Bestimmungsmethode (in Anlehnung an EN ISO 3681):

Bestimmung des Acetatgruppen-Anteils (Polyvinylacetatgehalt)

Unter PV-Acetatgehalt wird der prozentige Anteil an Acetylgruppen verstanden, der sich aus dem Verbrauch der für die Verseifung von 1 g Substanz notwendigen Menge ergibt.

Etwa 2 g der zu untersuchenden Substanz werden in einem 500 ml Rundkolben auf 1 mg genau eingewogen und mit 90 ml Ethanol und 10 ml Benzylalkohol am Rückfluß gelöst. Nach dem Abkühlen wird die Lösung mit 0,01 n NaOH gegen Phenolphthalein neutral gestellt. Anschließend werden 25,0 ml 0,1 n KOH zugegeben und 1,5 Stunden am Rückfluß erhitzt. Man läßt den Kolben verschlossen abkühlen und titriert den Laugenüberschuß mit 0,1 n Salzsäure gegen Phenolphthalein als Indikator bis zur bleibenden Entfärbung zurück. In gleicher Weise wird eine Blindprobe behandelt. Der PV-Acetatgehalt berechnet sich wie folgt: PV-Acetatgehalt [%] = (b-a)*86/E, mit a = Verbrauch an 0,1 n KOH für Probe in ml, b = Verbrauch an 0,1 n KOH für Blindversuch in ml und E = Einwaage der zu untersuchenden Substanz trocken in g.

b) Bestimmung des Vinylalkoholgruppen-Anteils (Polyvinylalkoholgehalt) beim unmodifizierten Polyvinylacetal

Der Polyvinylalkoholgehalt ist der prozentuale Anteil an Hydroxylgruppen, der durch die nachträgliche Acetylierung mit Essigsäureanhydrid nachweisbar ist.

Bestimmungsmethode (in Anlehnung an DIN 53240)

Etwa 1 g Mowital wird in einem 300 ml Schliff-Erlenmeyerkolben auf 1 mg genau eingewogen, 10,0 ml Essigsäureanhydrid-Pyridin-Gemisch (23:77 V/V) zugefügt und 15-20 Stunden auf 50°C erwärmt. Nach dem Abkühlen kommen 17 ml Dichlorethan hinzu und es wird kurzzeitig umgeschwenkt. Anschließend gibt man unter Rühren 8 ml Wasser zu, verschließt den Kolben mit einem Stopfen und rührt 10 Minuten. Kolbenhals und Stopfen werden mit 50 ml E-Wasser abgespült, mit 5 ml n-Butanol überschichtet und die freie Essigsäure mit 1 n Natronlauge gegen Phenolphtalein titriert. In gleicher Weise wird eine Blindprobe behandelt. Der Polyvinylalkoholgehalt berechnet sich wie folgt: Polyvinylalkoholgehalt [%] = (b-a)*440/E, mit a = Verbrauch an 1 n NaOH für Probe in ml, b = Verbrauch an 1 n NaOH für Blindprobe in ml, und E = Einwaage der zu untersuchenden Substanz trocken in g.

Zu Bestimmung des Vinylalkoholgruppen-Anteils des mit dem Epoxid umgesetzten Polyvinylacetals wird der Acetatgruppen-Anteil mit der Methode a) vor und nach der Umsetzung ermittelt. Durch die Umsetzung erhöht sich der Acetatgruppen-Anteil um die Anzahl der mit dem Epoxid abreagierten Hydroxygruppen. Die ursprünglich vorhandene Anzahl der Hydroxygruppen wird am Ursprungsmaterial gemäß Methode b) ermittelt. Die Differenz dieser Werte entspricht dem Anteil der Vinylalkoholgruppen im dem mit dem Epoxid umgesetzten Polyvinylacetal.

Für die nachfolgend aufgeführten Beispiele wurde ein Doppelschneckenextruder mit folgender Konfiguration und Parametern verwendet:

$$L/D = 72$$

Anzahl Heizzonen: 18
Durchsatz: 20 kg/h
Temperatur: 200°C

Die Dosierung des Polyvinylacetals (Mowital der F. KSE) erfolgt an der Aufgabezone, die Dosierung des Katalysators bzw des Reagenzsystems an Heizzone 4. Der Katalysator (Zn(acac)TfO) wird vorher in situ durch die äquimolare Umsetzung von 0,1M Lösung Zinkacetylacetonat ($Zn(acac)_2$) in DME (Dimethoxethan) mit 0,1M Lösung Trifluormethansulfonsäure (TfOH) (in DME) hergestellt. Näheren Angaben zu diesem Katalysatorsystem finden sich in EP 1 403 289 A1

Die Auswertung des Umsatzes (Grad der Modifizierung) erfolgte unter Zuhilfenahme der NMR-Spektroskopie und quantitative Auswertung des Signals der Methylgruppe des Hydroxypropylrestes im Verhältnis zu der des Acetalrestes.

Die folgende Tabelle zeigt die erhaltenen Ergebnisse. Es zeigt sich, das die erfindungsgemäßen acetalisierten Polyvinylalkohole eine erheblich verminderte Viskosität aufweisen.

| Nr. | verwendete Mowital-Type / Restalkoholgehalt Gew.% | Dosierung Epoxypropan bezogen auf das Polymer g | | Dosierung Katalysator, bezogen auf das Epoxid | | Umdrehungszahl der Schnecke | Grad der Umsetzung | | Anzahl Vinyl-Hydroxypropylgruppen | Anzahl Vinylalkohol gruppen | Viskosität | Viskositätsänderung |
|---|---|---|---|---|---|---|---|---|---|---|---|---|
| | | mmol/kg | kg/h | µmol/g | kg/h | rpm | mmol/kg | % | Gew% | Gew% | η [mPas] | Δη [%] |
| V1 | B 30 HH 11-14 Gew.% | - | - | - | - | - | - | - | - | 12,70 | 41,0 | - |
| 1 | B 30 HH 11-14 Gew.% | 2,5 | 2,90 | 2 | 0,4 | 400 | 0,7 | 28,0 | 3,17 | 9,53 | 28,2 | 31,2 |
| 2 | B 30 HH 11-14 Gew.% | 2,5 | 2,90 | 2,5 | 0,5 | 400 | 1,05 | 42,0 | 4,74 | 7,96 | 27,2 | 33,7 |
| 3 | B 30 HH 11-14 Gew.% | 2,5 | 2,90 | 3 | 0,6 | 400 | 1,17 | 46,8 | 5,27 | 7,43 | 27,0 | 34,1 |
| 4 | B 30 HH 11-14 Gew.% | 2,5 | 2,90 | 3 | 0,6 | 500 | 1,17 | 46,8 | 5,27 | 7,43 | 26,4 | 35,6 |
| V2 | B45 H 18-21 Gew.% | - | - | - | - | - | - | - | - | 18,80 | 68,6 | - |
| 5 | B 45 H 18-21 Gew.% | 2,5 | 2,90 | 2 | 0,4 | 300 | 0,87 | 34,8 | 4,81 | 13,99 | 43,2 | 37,0 |
| 6 | B 45 H 18-21 Gew.% | 2,5 | 2,90 | 3 | 0,6 | 300 | 1,04 | 41,6 | 5,54 | 13,26 | 41,5 | 39,5 |

**Patentansprüche**

**1.** Verfahren zur Herstellung von modifizierten acetalisierten Polyvinylalkoholen durch Umsetzen einer Schmelze des acetalisierten Polyvinylalkohols mit mindestens einem Epoxid der allgemeinen Formel I

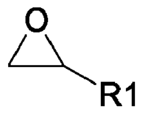

I

mit R1 = H, aliphatischer, cycloaliphatisch aromatischer oder aliphatisch-aromatischer Rest mit 1 bis 20 Kohlenstoffatomen oder $CH_2O$ (CO) $CCH_2R_2$, und R2 = H, aliphatischer Rest mit 1 bis 10 Kohlenstoffatomen.

**2.** Verfahren nach Anspruch 1, **dadurch gekennzeichnet, dass** als Epoxid eine Verbindung der allgemeinen Formel II eingesetzt wird, wobei R2 die Bedeutung H, aliphatischer Rest mit 1 bis 10 Kohlenstoffatomen besitzt

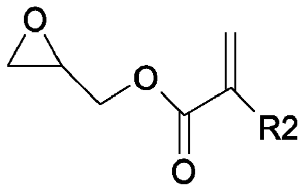

II

**3.** Verfahren nach Anspruch 1, **dadurch gekennzeichnet, dass** der acetalisierte Polyvinylalkohol einen Restpolyvinylalkoholgehalt von 10 bis 30 Gew.% besitzt.

**4.** Verfahren nach einem der Ansprüche 1 bis 3, **dadurch gekennzeichnet, dass** die Umsetzung unter Abwesenheit eines organischen Lösungsmittels oder Wasser durchgeführt wird.

**5.** Verfahren nach einem der Ansprüche 1 bis 4, **dadurch gekennzeichnet, dass** die Umsetzung in Anwesenheit von Zn, Fe und/oder Sn-Salzen durchgeführt wird.

**6.** Verfahren nach einem der Ansprüche 1 bis 5, **dadurch gekennzeichnet, dass** die Umsetzung in Anwesenheit von Basen durchgeführt wird.

**7.** Verfahren nach einem der Ansprüche 1 bis 6, **dadurch gekennzeichnet, dass** die Umsetzung in Anwesenheit von sterisch gehinderten Stickstoffbasen durchgeführt wird.

**8.** Verfahren nach einem der Ansprüche 1 bis 6, **dadurch gekennzeichnet, dass** die Umsetzung bei einer Schmelzetemperatur von 150 bis 270 °C durchgeführt wird.

**9.** Verfahren nach einem der Ansprüche 1 bis 8, **dadurch gekennzeichnet, dass** die Umsetzung bis zu einer Verminderung der Viskosität von mindestens 10 % bezogen auf den eingesetzten acetalisierten Polyvinylalkohol durchgeführt wird.

**10.** Verfahren nach einem der Ansprüche 1 bis 9, **dadurch gekennzeichnet, dass** 25 bis 95 % der Hydroxyfunktionen des acetalisierten Polyvinylalkohols mit dem Epoxid umgesetzt werden.

Europäisches Patentamt

# EUROPÄISCHER RECHERCHENBERICHT

Nummer der Anmeldung
EP 05 11 2546

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | DE 42 01 941 A1 (ANGYAL, PAUL V., 8000 MUENCHEN, DE; BIRO, BARNABAS, 8022 GRUENWALD, DE) 12. August 1993 (1993-08-12) * das ganze Dokument * ----- | 1-10 | INV. C08F8/00 |
| Y,D | EP 1 403 289 A (KURARAY CO., LTD) 31. März 2004 (2004-03-31) * das ganze Dokument * ----- | 1-10 | |
| X | PATENT ABSTRACTS OF JAPAN Bd. 2000, Nr. 25, 12. April 2001 (2001-04-12) & JP 2001 220426 A (SEKISUI CHEM CO LTD), 14. August 2001 (2001-08-14) * Zusammenfassung * ----- | 1-3,9,10 | |
| | | | RECHERCHIERTE SACHGEBIETE (IPC) |
| | | | C08F |

Der vorliegende Recherchenbericht wurde für alle Patentansprüche erstellt

1

| Recherchenort | Abschlußdatum der Recherche | Prüfer |
|---|---|---|
| Den Haag | 28. April 2006 | Droghetti, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 05 11 2546

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-04-2006

| Im Recherchenbericht angeführtes Patentdokument | Datum der Veröffentlichung | Mitglied(er) der Patentfamilie | Datum der Veröffentlichung |
|---|---|---|---|
| DE 4201941 A1 | 12-08-1993 | KEINE | |
| EP 1403289 A | 31-03-2004 | CA 2446475 A1 | 21-11-2002 |
| | | CN 1464883 A | 31-12-2003 |
| | | WO 02092643 A1 | 21-11-2002 |
| | | US 2004096683 A1 | 20-05-2004 |
| JP 2001220426 A | 14-08-2001 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1403289 A1
- DE 4201941 A1
- WO 2005019312 A1